(19) **Europäisches Patentamt**

**European Patent Office**

**Office européen des brevets**

(11) **EP 0 953 600 B1**

(12) **EUROPÄISCHE PATENTSCHRIFT**

(45) Veröffentlichungstag und Bekanntmachung des Hinweises auf die Patenterteilung:
**28.05.2003  Patentblatt 2003/22**

(51) Int Cl.$^7$: **C08L 23/10**

(21) Anmeldenummer: **99107098.8**

(22) Anmeldetag: **12.04.1999**

(54) **Verwendung von Modifikatoren auf Basis von Ethylenen oder amorphen Olefinelastomeren zur Reduktion der Oberflächenklebrigkeit von amorphen Polypropylenen**

Use of modifiers based on ethylene or amorphous elastomers to reduce the surface tack of amorphous polypropylene

Utilisation des modificateurs basés sur de l'éthylène ou sur des élastomères amorphes pour la réduction d'adhésivité de polyropylène amorphe

(84) Benannte Vertragsstaaten:
**AT BE DE FR GB IT NL**

(30) Priorität: **24.04.1998  AT  68998**

(43) Veröffentlichungstag der Anmeldung:
**03.11.1999  Patentblatt 1999/44**

(73) Patentinhaber: **Borealis GmbH**
**2323 Schwechat-Mannswörth (AT)**

(72) Erfinder:
• **Gahleitner, Markus, Dipl.-Ing. Dr.**
**4501 Neuhofen (AT)**
• **Heinemann, Hermann, Ing.**
**3331 Kematen/Ybbs (AT)**
• **Hafner, Norbert, Dipl.-Ing. Dr.**
**4020 Linz (AT)**
• **Paulik, Christian, Dipl.-Ing. Dr.**
**4030 Linz (AT)**

(74) Vertreter: **VA TECH Patente GmbH & Co**
**Stahlstrasse 21 a**
**4020 Linz (AT)**

(56) Entgegenhaltungen:
**EP-A- 0 632 062          DE-A- 2 127 709**
**US-A- 5 478 891**

**Beschreibung**

Die Erfindung betrifft die Verwendung von Modifikatoren auf Basis von Ethylenen oder amorphen Olefinelastomeren zur Reduktion der Oberflächenklebrigkeit von amorphen Polypropylenen.

Weiche, überwiegend bzw. vollständig thermoplastische Polyolefine sind von großem technischem wie wirtschaftlichem Interesse. Speziell hochgradig amorphe Polypropylene, wie sie etwa aus EP-A-632062 (PCD Polymere GmbH) oder EP-A-457307 (REXENE Corp.) bekannt sind, zeigen ein Verhalten welches von jenem herkömmlichen isotaktischen Polypropylens stark abweicht. Es zeichnet sich insbesonders durch Weichheit, Elastizität und Schlagzähigkeit aus, wobei der inhärente Vorteil von Polypropylen (PP), nämlich der relativ hohe Schmelzpunkt, weitgehend erhalten bleibt. In Kombination mit der chemischen Zusammensetzung (das Material ist chemisch inert und ein reines Polyolefin, es enthält weder Halogene noch Weichmacher und ist daher ausgesprochen umweltfreundlich) eröffnen sich damit neue und für PP bisher nicht zugängliche Anwendungssegmente, etwa in der Substitution von Weich-PVC oder thermoplastischen Elastomeren.

Allerdings zeigen diese Materialien oftmals eine gewisse Oberflächenklebrigkeit, welche für zahlreiche Anwendungen als störend bzw. hinderlich empfunden wird. Die Belagsbildung erfolgt z.B. durch das Ausschwitzen glänzender bzw. trübender und zudem klebriger Anteile auf die Oberfläche von beispielsweise Formteilen und Folien aus solchen Materialien, entweder schon im Verarbeitungsprozeß oder in der Folge bei Lagerung der Teile. Es wurden daher Anstrengungen unternommen, um Wege zu finden, diesen Prozeß durch nachträgliche Modifikation ohne Änderung des Herstellverfahrens und unter weitestmöglicher Beibehaltung des Eigenschaftsprofils zu verhindern. Beispielsweise wurden gemäß WO 96/22327 PP zur Verringerung der Klebrigkeit in einem sehr aufwendigen Verfahren gepfropft, gemäß JP-Kokai 90/48882 und JP-Kokai 80/67779 mit Styrolelastomeren bzw. gemäß DE-OS 2127709 mit anorganischen Additiven vermischt. Diese bekannten Verfahren sind jedoch zum Teil sehr aufwendig und ergeben nur eine ungenügende bzw. nicht ausreichende Reduktion der Oberflächenklebrigkeit.

Es konnte nun überraschend gefunden werden, daß bei Zusatz von speziellen Ethylenen oder Olefinelastomeren zu amorphen PP deren Oberflächenklebrigkeit besonders effizient reduziert werden kann.

Gegenstand der Erfindung ist demnach die Verwendung eines Modifikators, ausgewählt aus den folgenden Stoffgruppen:

a) im Hochdruckverfahren ohne Einsatz von Katalysatoren hergestellte Homopolymere des Ethylens sowie Copolymere des Ethylens mit höheren $\alpha$-Olefinen mit einem Ethylenanteil von mehr als 90 mol % und einer Dichte von maximal 0,92 g/cm$^3$ (LDPE),
b) im Niederdruckverfahren mit Einsatz von Katalysatoren hergestellte Copolymere des Ethylens mit höheren $\alpha$-Olefinen mit einem Ethylenanteil von mehr als 75 mol % und einer Dichte von maximal 0,93 g/cm$^3$ (LLDPE-linear low density polyethylene),
c) hochgradig amorphe Olefinelastomere mit einer Schmelzenthalpie von höchstens 15 J/g, bestehend aus Copolymeren von Ethylen und Propylen (EPR) oder aus Terpolymeren von Ethylen, Propylen, und Dienen (EPDM) mit einer Dichte von maximal 0,88 g/cm$^3$ sowie Mischungen dieser Olefinelastomere mit Polyethylenen oder isotaktischen Polypropylenen, wobei der Gewichtsanteil des Olefinelastomers jeweils größer als 50 Gew. % ist,

als Zusatzkompenente zu einem hochgradig amorphen Polypropylen (Basispolymer) mit einer Schmelzenthalpie von höchstens 40 J/g und einem Schmelzflußindex von 0,1 bis 50 g/10 min, wobei das hochgradig amorphe Polypropylen ein Homopolymeres des Propylens oder ein Copolymeres des Propylens mit einem oder mehreren $\alpha$-Olefinen und mit einem Propylenanteil von mindestens 80 mol % ist, zur Reduktion der Oberflächenklebrigkeit.

Ein weiterer Gegenstand der Erfindung ist ein Verfahren zur Reduktion der Oberflächenklebrigkeit von hochgradig amorphen Polypropylenen (Basispolymer) mit einer Schmelzenthalpie von höchstens 40 J/g und einem Schmelzflußindex von 0,1 bis 50 g/10 min, wobei das hochgradig amorphe Polypropylen ein Homopolymeres des Propylens oder ein Copolymeres des Propylens mit einem oder mehreren $\alpha$-Olefinen und mit einem Propylenanteil von mindestens 80 mol % ist, dadurch gekennzeichnet, daß den hochgradig amorphen Polypropylenen Modifikatoren, ausgewählt aus den folgenden Stoffgruppen:

a) im Hochdruckverfahren ohne Einsatz von Katalysatoren hergestellte Homopolymere des Ethylens sowie Copolymere des Ethylens mit höheren $\alpha$-Olefinen mit einem Ethylenanteil von mehr als 90 mol % und einer Dichte von maximal 0,92 g/cm$^3$ (LDPE),
b) im Niederdruckverfahren mit Einsatz von Katalysatoren hergestellte Copolymere des Ethylens mit höheren $\alpha$-Olefinen mit einem Ethylenanteil von mehr als 75 mol% und einer Dichte von maximal 0,93 g/cm$^3$ (LLDPE),
c) hochgradig amorphe Olefinelastomere mit einer Schmelzenthalpie von höchstens 15 J/g, bestehend aus Copolymeren von Ethylen und Propylen (EPR) oder aus Terpolymeren von Ethylen, Propylen, und Dienen (EPDM) mit einer Dichte von maximal 0,88 g/cm$^3$ sowie Mischungen dieser Olefinelastomere mit Polyethylenen oder isotaktischen Polypropylenen, wobei der Gewichtsanteil des Olefinelastomers jeweils größer als 50 Gew. % ist,

zugemischt werden.

Die Modifikatoren werden bevorzugt in einer Menge von 5 bis 60 Gew.%, besonders bevorzugt von 10 bis 40 Gew.%, bezogen auf die gesamte Polymermenge, zugesetzt.

Das als Basispolymer eingesetzte hochgradig amorphe PP weist dabei bevorzugt eine Schmelzenthalpie von höchstens 30 J/g und einen Schmelzflußindex von 0,5 bis 25 g/10 min auf und ist bevorzugt ein Homopolymeres des Propylens oder ein Copolymeres des Propylens mit einem oder mehreren $\alpha$-Olefinen und einem Propylenanteil von mindestens 85 mol %.

Im Falle des Einsatzes von amorphen Coplymeren des Propylens liegen diese bevorzugt als Random-Copolymere oder heterophasische Copolymere mit einem oder mehreren Comonomeren aus der Gruppe der $C_2$- und $C_4$- bis $C_{10}$-Olefine vor, wobei Ethylen als Comonomer besonders bevorzugt ist. Die als Basispolymere eingesetzten hochgradig amorphen PP können nach bekannten Verfahren hergestellt werden, wie beispielsweise in EP 768338 A beschrieben. Sie sind auch kommerziell erhältlich, beispielsweise als Rexflex® bei Fa. Huntsman.

Die als Modifikatoren eingesetzten Hochdruck-Polyethylene gemäß (a) können ebenfalls nach bekannten Verfahren hergestellt werden, wie beispielsweise in Acta Polym. 37 (1986), Seiten 241-247 beschrieben. Sie sind auch kommerziell erhältlich, beispielsweise als Daplen ® LDPE bei PCD-Polymere oder Novolen ® LDPE bei BASF. Die gemäß (b) eingesetzten Niederdruck-Polyethylen-Copolymere können gleichfalls nach bekannten Verfahren hergestellt werden, wie beispielsweise in Proc. of Metallocenes '96, Düsseldorf, Seiten 59-86 und 99-109 beschrieben. Sie sind auch kommerziell erhältlich, beispielsweise als Engage® bei Dow bzw. Exact® bei Exxon. Die hochgradig amorphen Olefinelastomere gemäß (c), sowie die für die Mischungen eingesetzten Polyethylene und isotaktischen PP können gleichfalls nach bekannten Verfahren hergestellt werden, wie z.B. in Adv. Polym. Blends Alloys Technol. 2 (1989) Seiten 12-24 beschrieben. Sie sind auch kommerziell erhältlich, beispielsweise als Dutral® von Enichem, bzw. Exxelor von Exxon. Isotaktisches PP und Polyethylen sind beispielsweise als Daplen-Typen, wie z.B. Daplen KS10 oder Daplen 2425K bei Fa. PCD-Polymere erhältlich.

Der Schmelzindex (MFI-melt flow index bzw. MFR-melt flow rate) wurde gemäß ISO 1133/DIN 53735 bei 230 °C und 2,16 kg bestimmt. Die Kristallinität wurde mittels DSC gemäß ISO 3146 bestimmt, ausgewertet wurde der zweite Aufheizvorgang in einem Zyklus zwischen 10 °C und 190 °C mit Heiz- bzw. Kühlraten von 10 K/min. Dabei wurde die Schmelzenthalpie ($H_m$) des für kristallines PP charakterisischen Peaks mit Maximum zwischen 140 und 170 °C berechnet. Die Mechanik der Systeme (Mischungen und Referenzmaterialien) wurde an im Spritzguß (gemäß DIN 16774 (1988) bei einer Massetemperatur von 250 °C und Formtemperatur von 30 °C) hergestellten Probekörpern im Zugversuch bei +23 °C am gespritzten Schulterstab F3/3 gemäß DIN 53457 (1981) bestimmt.

Zur Beurteilung der Oberflächenklebrigkeit wurde folgende Meßmethode (Schwitztest) angewendet:

Im Spritzguß hergestellte Plättchen (40x40x2 mm) wurden bei 100 °C im Wärmeschrank berührungsfrei gelagert, wobei klebrige Anteile unter Belagsbildung an die Oberfläche migrierten. Nach 3 Tagen erfolgte sowohl eine optische Bestimmung der Oberflächenqualität in bezug auf die Belagsbildung (Abstufung klebrig / wenig klebrig / nicht klebrig), als auch ein Waschschritt in kaltem n-Hexan zur Quantifizierung der Oberflächenklebrigkeit, bei dem der Oberflächenbelag abgewaschen und der Masseverlust bestimmt wurde. Dazu wurden jeweils 5 Plättchen in ein 250 ml - Becherglas an einem Drahtbügel derart eingehängt, daß sich die Plättchen nicht gegenseitig berührten. Anschließend wurde so viel n-Hexan zugegeben, daß die Plättchen vollständig bedeckt waren. Nach 5 Minuten Rühren (Magnetrührer) bei Raumtemperatur wurden die Plättchen herausgehoben und zum Abtropfen über dem Becherglas belassen. Nach Trocknung der Plättchen bei ca. 60 °C wurde der Masseverlust (MV) bestimmt.

Da es für viele Anwendungen wesentlich ist, daß die erfindungsgemäße Reduktion der Oberflächenklebrigkeit mit einer möglichst geringen Erhöhung der Steifigkeit der Basispolymere verbunden ist, wurde zur Quantifizierung dieser kombinierten Forderung ein "W-Faktor" herangezogen, der als das Produkt des oben gemessenen Masseverlustes MV (in Gew.%) mit dem E-Modul (in MPa) definiert ist:

$$W = MV \times E\text{-Modul}$$

Entscheidend für die Beurteilung der erfindungsgemäß erhaltenen PP-Modifikationen (Basispolymer plus Modifikator) ist demnach neben der optischen Beurteilung ein geringer Masseverlust beim Schwitztest und/oder ein W-Faktor, der kleiner ist als der W-Faktor des eingesetzten, nicht modifizierten Basispolymers.

Die Herstellung des modifizierten amorphen PP erfolgt bevorzugt durch Mischung von Basispolymer und Modifikator in einem Kneter oder Mischer üblicher Bauweise bei Temperaturen zwischen 190 und 300 °C, besonders bevorzugt zwischen 200 und 250 °C, gegebenenfalls unter Zusatz von üblichen Stabilisatoren sowie eventuell Nukleierungsmitteln und organischen Peroxiden zur Einstellung der Verarbeitbarkeit durch gezielte Degradation.

Beispiele:

Als Basismaterial 1 (ELPP-H) wurde ein ELPP-Homopolymer (hergestellt gemäß Beispiel 1 aus EP-A-632062) eingesetzt, das wie folgt degradiert wurde: Das gemäß Beispiel 1 erhaltene ELPP wurde auf einer Brechmühle nach Abkühlung auf unter 0 °C bis zu einer Korngröße von unter 3 mm gemahlen. Anschließend wurden 0,1 Gew.% Bis(1,1dimethylethyl)-peroxyisopropyl)benzol (Perkadox 14 Sfl, Fa. AKZO NOBEL), bezogen auf die Menge des Polymers, eingemischt, das Gemisch auf einem COLLIN-Zweischneckenextruder mit 25 mm Schneckendurchmesser bei 190--200 °C aufgeschmolzen und mit einem Ausstoß von 2 kg/h über zwei Runddüsen zu Strängen von je 3 mm extrudiert. Die Verweilzeit im Extruder betrug etwa 30 s. Der Strang wurde nach Erstarrung im Wasserbad granuliert. In diesem Prozeß wurde das ELPP zu einem MFI von 6 g 10 min degradiert. Das Material weist einen Zug-E-Modul von 17 MPa, eine Kristallinität entsprechend einer Schmelzenthalpie von 19 J/g und einen W-Faktor von 95 auf.

Als Basismaterial 2 (FP-D 100) wurde ein hochgradig amorphes PP-Homopolymer, das kommerzielle Produkt REXFLEX FP-D 100 der Fa. REXENE Corp. eingesetzt, welches einen Zug-E-Modul von 80 MPa, eine Kristallinität entsprechend einer Schmelzenthalpie von 37 J/g und einen W-Faktor von 534 aufweist.

Als Modifikatoren wurden folgende Produkte eingesetzt:

EPR        DUTRAL PM 06 (EPR-Masterbatch auf PE-Basis; kommerz. Produkt Fa. ENI)
EPDM       Royalene 7565 (EPDM-Masterbatch 79 %ig auf PE-Basis; kommerz. Produkt Fa. AES)
LDPE       Daplen 2425 K (LDPE; kommerz. Produkt Fa. PCD Polymere)
MCPE       Engage 8100 (Metallocen-LLDPE; kommerz. Produkt Fa. DOW)
Talkum     Talkum Naintsch A 7 (inerter Füllstoff; kommerz. Produkt Fa. Naintsch/Luzenac)

Beispiele 1 bis 8 und Vergleichsbeispiele V1 bis V3:

Die Mischungen in der in der Tabelle angeführten Zusammensetzung wurden auf einem COLLIN-Zweischnek-kenextruder mit 25 mm Schneckendurchmesser bei 200 - 240 °C aufgeschmolzen und mit einem Ausstoß von 4 kg/h über zwei Runddüsen zu Strängen von je 3 mm extrudiert. Die Verweilzeit im Extruder betrug etwa 20 s. Der Strang wurde nach Erstarrung im Wasserbad granuliert.

In der Tabelle sind auch MFI, E-Modul, qualitative optische Beurteilung, Massenverlust und W-Faktor der Polymeren zusammengestellt. Aus den angegebenen Werten ist ersichtlich, daß bei beiden eingesetzten Basispolymeren (ELPP-H und FP-D 100) sowohl der Masseverlust als auch der W-Faktor größer sind, als bei den mit unterschiedlichen Modifikatoren (EPR, EPDM, LPDE, MCPE = LLDPE) modifizierten Mischungen.

Tabelle: "Oberflächenklebrigkeit:

| Beispiel | Basis | Modifikator Typ | Menge Gew.% | MFI 230°/2,16kg g/10min | Zugversuch E-Modul MPa | Optik *) (3d/100 °C) | Verlust (3d/100 °C) Gew.% | W-Faktor (MVxE) Gew.%xMPa |
|---|---|---|---|---|---|---|---|---|
| 1 | ELPP-H | EPR | 50 | 0,7 | 41 | B | 1,75 | 71,8 |
| 2 | ELPP-H | EPDM | 50 | 0,9 | 30 | B | 1,87 | 56,1 |
| 3 | ELPP-H | LDPE | 25 | 1,0 | 37 | B | 2,15 | 79,6 |
| 4 | ELPP-H | LDPE | 50 | 3,4 | 88 | A | 0,58 | 51,0 |
| 5 | ELPP-H | MCPE | 25 | 2,5 | 10 | B | 3,12 | 31,2 |
| 6 | ELPP-H | MCPE | 50 | 1,0 | 9 | B | 1,66 | 14,9 |
| 7 | FP-D 100 | LDPE | 25 | 13,6 | 75 | B | 2,91 | 218,3 |
| 8 | FP-D 100 | LDPE | 50 | 12,9 | 101 | A | 0,61 | 61.6 |
| V1 | ELPP-H | - | 0 | 6,0 | 17 | C | 5,59 | 95,0 |
| V2 | ELPP-H | Talkum | 20 | 3,7 | 40 | C | 4,45 | 178,0 |
| V3 | FP-D 100 | - | 0 | 14,0 | 80 | C | 6,68 | 534,4 |

*) A = nicht klebrig

B = wenig klebrig

C = klebrig

**Patentansprüche**

1. Verwendung eines Modifikators, ausgewählt aus den folgenden Stoffgruppen:

a) im Hochdruckverfahren ohne Einsatz von Katalysatoren hergestellte Homopolymere des Ethylens sowie Copolymere des Ethylens mit höheren α-Olefinen mit einem Ethylenanteil von mehr als 90 mol % und einer Dichte von maximal 0,92 g/cm$^3$ (LDPE),

b) im Niederdruckverfahren mit Einsatz von Katalysatoren hergestellte Copolymere des Ethylens mit höheren α-Olefinen mit einem Ethylenanteil von mehr als 75 mol% und einer Dichte von maximal 0,93 g/cm$^3$ (LLDPE),

c) hochgradig amorphe Olefinelastomere mit einer Schmelzenthalpie von höchstens 15 J/g, bestehend aus Copolymeren von Ethylen und Propylen (EPR) oder aus Terpolymeren von Ethylen, Propylen, und Dienen (EPDM) mit einer Dichte von maximal 0,88 g/cm$^3$ sowie Mischungen dieser Olefinelastomere mit Polyethylenen oder isotaktischen Polypropylenen, wobei der Gewichtsanteil des Olefinelastomers jeweils größer als 50 Gew. % ist,

als Zusatzkompenente zu einem hochgradig amorphen Polypropylen (Basispolymer) mit einer Schmelzenthalpie von höchstens 40 J/g und einem Schmelzflußindex von 0,1 bis 50 g/10 min, wobei das hochgradig amorphe Polypropylen ein Homopolymeres des Propylens oder ein Copolymeres des Propylens mit einem oder mehreren α-Olefinen und mit einem Propylenanteil von mindestens 80 mol % ist,
zur Reduktion der Oberflächenklebrigkeit.

**2.** Verwendung gemäß Anspruch 1, **dadurch gekennzeichnet, daß** das hochgradig amorphe Polypropylen eine Schmelzenthalpie von höchstens 30 J/g und einen Schmelzflußindex von 0,5 bis 25 g/10 min aufweist und ein Homopolymeres des Propylens oder ein Copolymeres des Propylens mit einem oder mehreren α-Olefinen und einem Propylenanteil von mindestens 85 mol % ist.

**3.** Verwendung gemäß Anspruch 1 oder 2, **dadurch gekennzeichnet, daß** als Copolymere des Propylens Random-Copolymere oder heterophasische Copolymere mit einem oder mehreren Comonomeren aus der Gruppe der C$_2$- und C$_4$- bis C$_{10}$-Olefine verwendet werden.

**4.** Verwendung gemäß Anspruch 3, **dadurch gekennzeichnet, daß** als Comonomer Ethylen verwendet wird.

**5.** Verwendung gemäß einem der Ansprüche 1 bis 4, **dadurch gekennzeichnet, daß** die Modifikatoren in einer Menge von 5 bis 60 Gew. %, bezogen auf die gesamte Polymermenge, vorliegen.

**6.** Verwendung gemäß Anspruch 5, **dadurch gekennzeichnet, daß** die Modifikatoren in einer Menge von 10 bis 40 Gew. %, bezogen auf die gesamte Polymermenge, vorliegen.

**7.** Verwendung gemäß einem der Ansprüche 1 bis 6, **dadurch gekennzeichnet, daß** der "W-Faktor" des mit dem Modifikator versetzten Basispolymers kleiner ist als der "W-Faktor" des nicht modifizierten Basispolymers.

**8.** Verfahren zur Reduktion der Oberflächenklebrigkeit von hochgradig amorphen Polypropylenen (Basispolymer) mit einer Schmelzenthalpie von höchstens 40 J/g und einem Schmelzflußindex von 0,1 bis 50 g/10 min, wobei das hochgradig amorphe Polypropylen ein Homopolymeres des Propylens oder ein Copolymeres des Propylens mit einem oder mehreren α-Olefinen und mit einem Propylenanteil von mindestens 80 mol % ist, **dadurch gekennzeichnet, daß** den hochgradig amorphen Polypropylenen Modifikatoren, ausgewählt aus den folgenden Stoffgruppen:

a) im Hochdruckverfahren ohne Einsatz von Katalysatoren hergestellte Homopolymere des Ethylens sowie Copolymere des Ethylens mit höheren α-Olefinen mit einem Ethylenanteil von mehr als 90 mol % und einer Dichte von maximal 0,92 g/cm$^3$ (LDPE),

b) im Niederdruckverfahren mit Einsatz von Katalysatoren hergestellte Copolymere des Ethylens mit höheren α-Olefinen mit einem Ethylenanteil von mehr als 75 mol% und einer Dichte von maximal 0,93 g/cm$^3$ (LLDPE),

c) hochgradig amorphe Olefinelastomere mit einer Schmelzenthalpie von höchstens 15 J/g, bestehend aus Copolymeren von Ethylen und Propylen (EPR) oder aus Terpolymeren von Ethylen, Propylen, und Dienen (EPDM) mit einer Dichte von maximal 0,88 g/cm$^3$ sowie Mischungen dieser Olefinelastomere mit Polyethylenen oder isotaktischen Polypropylenen, wobei der Gewichtsanteil des Olefinelastomers jeweils größer als 50 Gew. % ist,

zugemischt werden.

## Claims

1. Use of a modifier selected from the following classes of materials:

   a) high-pressure uncatalyzed ethylene homopolymers or ethylene-higher-$\alpha$-olefin copolymers with a proportion of more than 90 mol% of ethylene and with a density of not more than 0.92 g/cm$^3$ (LDPE),
   b) low-pressure catalyzed ethylene-higher-$\alpha$-olefin copolymers with a proportion of more than 75 mol% of ethylene and with a density of not more than 0.93 g/cm$^3$ (LLDPE), and
   c) highly amorphous olefin elastomers with an enthalpy of fusion of not more than 15 J/g, composed of copolymers of ethylene and propylene (EPR) or of terpolymers of ethylene, propylene and dienes (EPDM) having a density of not more than 0.88 g/cm$^3$, or mixtures of these olefin elastomers with polyethylenes or with isotactic polypropylenes, where the proportion of the olefin elastomer by weight is in each case more than 50%,

   as a component for adding to a highly amorphous polypropylene (base polymer) with an enthalpy of fusion of not more than 40 J/g and a melt flow index of from 0.1 to 50 g/10 min, where the highly amorphous polypropylene is a homopolymer of propylene or a copolymer of propylene with one or more $\alpha$-olefins and has a proportion of at least 80 mol% of propylene,
   for reducing surface tack.

2. The use as claimed in claim 1, **characterized in that** the highly amorphous polypropylene has an enthalpy of fusion of not more than 30 J/g and a melt flow index of from 0.5 to 25 g/10 min, and is a homopolymer of propylene or a copolymer of propylene with one or more $\alpha$-olefins and has a proportion of at least 85 mol% of propylene.

3. The use as claimed in claim 1 or 2, **characterized in that** the copolymers of propylene used are random copolymers or heterophasic copolymers with one or more comonomers selected from the class of the $C_{2-}$ and $C_4$-$C_{10}$ olefins.

4. The use as claimed in claim 3, **characterized in that** ethylene is used as comonomer.

5. The use as claimed in any one of claims 1 to 4, **characterized in that** the amount of the modifiers present is from 5 to 60% by weight, based on the total amount of polymer.

6. The use as claimed in claim 5, **characterized in that** the amount of the modifiers present is from 10 to 40% by weight, based on the total amount of polymer.

7. The use as claimed in any one of claims 1 to 6, **characterized in that** the "W" factor of the base polymer mixed with the modifier is smaller than the "W" factor of the unmodified base polymer.

8. A process for reducing the surface tack of highly amorphous polypropylene (base polymer) with an enthalpy of fusion of not more than 40 J/g and a melt flow index of from 0.1 to 50 g/10 min, where the highly amorphous polypropylene is a propylene homopolymer or a copolymer of propylene with one or more $\alpha$-olefins and has a proportion of not less than 80 mol% of propylene, which comprises admixing modifiers selected from the following classes of materials:

   a) high-pressure uncatalyzed ethylene homopolymers or ethylene-higher-$\alpha$-olefin copolymers with a proportion of more than 90 mol% of ethylene and with a density of not more than 0.92 g/cm$^3$ (LOPE),
   b) low-pressure catalyzed ethylene-higher-$\alpha$-olefin copolymers with a proportion of more than 75 mol% of ethylene and with a density of not more than 0.93 g/cm$^3$ (LLDPE), and
   c) highly amorphous olefin elastomers with an enthalpy of fusion of not more than 15 J/g, consisting of copolymers of ethylene and propylene (EPR) or of terpolymers of ethylene, propylene and dienes (EPDM) having a density of not more than 0.88 g/cm$^3$, or mixtures of these olefin elastomers with polyethylenes or with isotactic polypropylenes, where the proportion of the olefin elastomer by weight is in each case more than 50%

   into the highly amorphous polypropylenes.

## Revendications

1. Utilisation d'un modificateur sélectionné parmi les groupes de matières suivants :

a) homopolymères d'éthylène ainsi que copolymères d'éthylène à oléfines supérieures $\alpha$, d'une teneur en éthylène supérieure à 90 % en mole et d'une densité maximale de 0,92 g/cm$^3$ (LDPE) préparés par procédé à haute pression sans utiliser de catalyseurs,

b) copolymères d'éthylène à oléfines supérieures $\alpha$, d'une teneur en éthylène supérieure à 75 % en mole et d'une densité maximale de 0,93 g/cm$^3$ (LLDPE) préparés par procédé à basse pression en utilisant des catalyseurs,

c) élastomères oléfiniques amorphes à haute performance avec une enthalpie de fusion de 15 J/g au maximum, consistant en copolymères d'éthylène et de propylène (EPR) ou en terpolymères d'éthylène, propylène et diènes (EPDM), d'une densité de 0,88 g/cm$^3$ au maximum, ainsi que mélanges de ces élastomères oléfiniques avec des polyéthylènes ou des polypropylènes isotactiques, la proportion en poids de l'élastomère oléfinique étant respectivement supérieure à 50 % en poids,

en tant que composant additionnel à un polypropylène amorphe à haute performance (polymère de base) avec une enthalpie de fusion de 40 J/g au maximum et un indice de flux de fusion de 0,1 à 50 g/10 min, le polypropylène amorphe à haute performance étant un homopolymère de propylène ou un copolymère de propylène comportant une ou plusieurs oléfines $\alpha$ et une teneur en propylène d'au moins 80 % en mole, dans le but de réduire l'adhésion en surface.

2. Utilisation selon la revendication 1, **caractérisée en ce que** le polypropylène amorphe à haute performance présente une enthalpie de fusion de 30 J/g au maximum et un indice de flux de fusion de 0,5 à 25 g/10 min et est un homopolymère de propylène ou un copolymère de propylène comportant une ou plusieurs oléfines $\alpha$ et une teneur en propylène d'au moins 85 % en mole.

3. Utilisation selon la revendication 1 ou 2, **caractérisée en ce qu'**on utilise comme copolymères de propylène des copolymères aléatoires ou hétérophasiques comportant un ou plusieurs comonomères du groupe des oléfines $C_2$- et $C_4$- à $C_{10}$.

4. Utilisation selon la revendication 3, **caractérisée en ce qu'**on utilise comme comonomère de l'éthylène.

5. Utilisation selon une des revendications 1 à 4, **caractérisée en ce que** les modificateurs sont présents dans une quantité de 5 à 60 % en poids, rapporté à la quantité totale de polymère.

6. Utilisation selon la revendication 5, **caractérisée en ce que** les modificateurs sont présents dans une quantité de 10 à 40 % en poids, rapporté à la quantité totale de polymère.

7. Utilisation selon une des revendications 1 à 6, **caractérisée en ce que** le « facteur W » du polymère de base transformé avec le modificateur est inférieur au « facteur W » du polymère de base non modifié.

8. Procédé de réduction de l'adhésion en surface de polypropylènes amorphes à haute performance (polymère de base) avec une enthalpie de fusion de 40 J/g au maximum et un indice de flux de fusion de 0,1 à 50 g/10 min, le polypropylène amorphe à haute performance étant un homopolymère de propylène ou un copolymère de propylène comportant une ou plusieurs oléfines $\alpha$ et une teneur en propylène d'au moins 80 % en mole, **caractérisé en ce que** sont mélangés aux polypropylènes amorphes à haute performance des modificateurs sélectionnés parmi les groupes de matières suivants :

a) homopolymères d'éthylène ainsi que copolymères d'éthylène à oléfines supérieures $\alpha$, d'une teneur en éthylène supérieure à 90 % en mole et d'une densité maximale de 0,92 g/cm$^3$ (LDPE) préparés par procédé à haute pression sans utiliser de catalyseurs,

b) copolymères d'éthylène à oléfines supérieures $\alpha$, d'une teneur en éthylène supérieure à 75 % en mole et d'une densité maximale de 0,93 g/cm$^3$ (LLDPE) préparés par procédé à basse pression en utilisant des catalyseurs,

c) élastomères oléfiniques amorphes à haute performance avec une enthalpie de fusion de 15 J/g au maximum, consistant en copolymères d'éthylène et de propylène (EPR) ou en terpolymères d'éthylène, propylène et diènes (EPDM), d'une densité de 0,88 g/cm$^3$ au maximum, ainsi que mélanges de ces élastomères oléfiniques avec des polyéthylènes ou des polypropylènes isotactiques, la proportion en poids de l'élastomère oléfinique étant respectivement supérieure à 50 % en poids.